# EUROPEAN PATENT SPECIFICATION

(11) **EP 3 792 526 B1**
(45) Date of publication and mention of the grant of the patent: **30.03.2022**
(21) Application number: 20194043.4
(22) Date of filing: 02.09.2020
(51) Int. Cl.: F16H 63/30, F16D 11/08

(54) **TRANSMISSION AND VEHICLE**
GETRIEBE UND FAHRZEUG
TRANSMISSION ET VÉHICULE

(30) Priority: 13.09.2019 JP 2019167530
(43) Date of publication of application: 17.03.2021
(73) Proprietor: YAMAHA HATSUDOKI KABUSHIKI KAISHA, Iwata-shi Shizuoka 438-8501 (JP)
(72) Inventor: KANZAKI, Yuya, Iwata-shi Shizuoka 438-8501 (JP)
(74) Representative: Grünecker Patent- und Rechtsanwälte PartG mbB

(56) References cited:
- EP-A1- 3 730 817
- JP-A- 2011 112 197
- US-A1- 2018 119 749

## Description

### TECHNICAL FIELD

The present invention relates to a transmission and a vehicle.

### BACKGROUND ART

So-called dog-clutch type stepped transmissions have been used in vehicles such as motorcycles, for example. A dog-clutch type stepped transmission includes a drive shaft to be driven by a drive source such as an internal combustion engine, a driven shaft, a plurality of drive gears that are provided on the drive shaft, and a plurality of driven gears that are provided on the driven shaft and are respectively in mesh with the drive gears. At least one of the drive gears is configured to be movable in the axial direction of the drive shaft, and at least one of the driven gears is configured to be movable in the axial direction of the driven shaft. With this transmission, the gear ratio is changed by changing the combination of a drive gear and a driven gear between which power is transmitted.

When a gear moves in the axial direction, the gear itself may tilt. That is, the gear may incline relative to the axial direction. This may lead to a poor mesh of the gear with another gear, thereby deteriorating the power transmission efficiency. In view of this, a transmission has been proposed in the art in which gears are configured so as not to move in the axial direction. Japanese Laid-Open Patent Publication No. 2011-112197 discloses a transmission in which drive gears are configured to be unmovable in the axial direction of the drive shaft and driven gears are configured to be unmovable in the axial direction of the driven shaft.

The transmission disclosed in Japanese Laid-Open Patent Publication No. 2011-112197 includes a plurality of drive gears that are attached to the drive shaft so as to be unrotatable and axially unmovable relative to the drive shaft, a plurality of driven gears that are attached to the driven shaft so as to be axially unmovable and rotatable relative to the driven shaft, and slide rings that are attached to the driven shaft so as to be axially movable and unrotatable relative to the driven shaft. Each driven gear includes dogs protruding in the axial direction. Each slide ring includes engagement holes into which dogs are inserted. For example, when a slide ring is moved toward the first driven gear, the engagement holes of the slide ring engage with the dogs of the first driven gear so that power can be transmitted between the first driven gear and the slide ring. Then, power is transmitted in the following order: the drive shaft, the first drive gear in mesh with the first driven gear, the first driven gear, the slide ring, and the driven shaft. As a result, power is transmitted with a gear ratio that is determined by the first drive gear and the first driven gear. On the other hand, when the slide ring is moved toward the second driven gear, the engagement holes of the slide ring engage with the dogs of the second driven gear so that power can be transmitted between the second driven gear and the slide ring. Then, power is transmitted in the following order: the drive shaft, the second drive gear in mesh with the second driven gear, the second driven gear, the slide ring, and the driven shaft. As a result, power is transmitted with a gear ratio that is determined by the second drive gear and the second driven gear. With the transmission described above, the drive gears and the driven gears do not move in the axial direction, and the tilting described above is unlikely to occur.

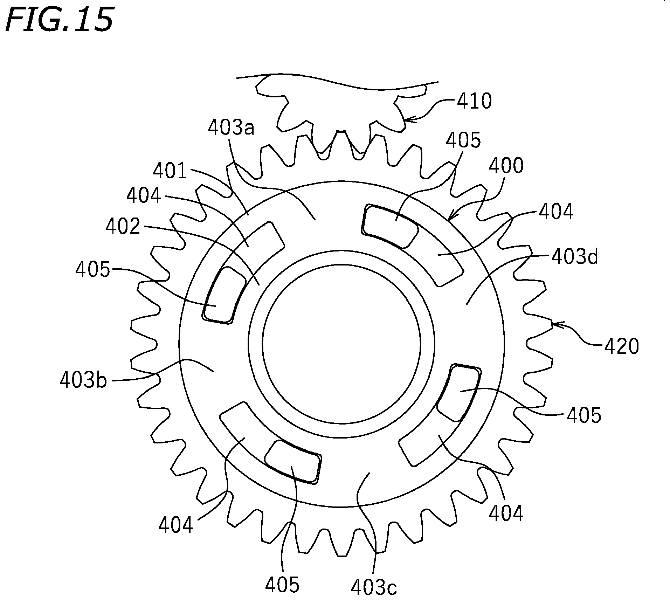

As shown in FIG. **15****,** a slide ring **400** includes an outer ring portion **401,** an inner ring portion **402** located inside the outer ring portion **401,** and four link portions **403a** to **403d** that connect together the outer ring portion 401 and the inner ring portion **402.** The link portions **403a** to **403d** are next to each other in the circumferential direction, and the link portions **403a** to **403d** each extend in the radial direction. Engagement holes **404** are each delimited by the outer ring portion **401,** the inner ring portion **402,** and adjacent ones of the link portions **403a** to **403d.** When inserted into the engagement holes **404,** dogs **405** come into contact with the link portions **403a** to **403d.** The link portions **403a** to **403d** are pushed in the rotation direction by the dogs **405.** As the dogs **405** push the link portions **403a** to **403d,** a rotational force is transmitted from a driven gear **420** to the slide ring **400.**

### SUMMARY OF INVENTION

### TECHNICAL PROBLEM

With the transmission described above, the number of link portions **403a** to **403d** to be pushed by the dogs **405** is four. It is preferred that the four link portions **403a** to **403d** equally receive a force, without a particular link portion receiving an excessive force. With the transmission described above, the link portions **403a** to **403d** are arranged equidistantly in the circumferential direction, and the dogs **405** are arranged equidistantly in the circumferential direction.

As a result of an in-depth study, the present inventor found that it is difficult to make uniform forces to be applied to the link portions **403a** to **403d** even if the link portions **403a** to **403d** are arranged equidistantly in the circumferential direction. That is, since the driven gear **420** rotates by receiving power from a drive gear **410,** the link portion **403a,** which is closer to the drive gear **410,** receives a larger force from the dog **405** than the link portion **403c,** which is farther away from the drive gear **410.** As the slide ring **400** rotates, each of the link portions **403a** to **403d** receives a larger force when located closer to the drive gear **410** while receiving a smaller force when located farther away from the drive gear **410.**

The positions of the dogs **405** or the link portions **403a** to **403d** may be misaligned due to variations in part precision. This also may lead to the link portions **403a** to **403d** receiving non-uniform forces, with a particular link portion receiving a large force.

With conventional transmissions, link portions are designed to be strong so as not to break even when a particular link portion receives a large force. This, however, increases the size and the weight of the slide ring **400.**

An object of the present invention, which has been made to solve such a problem, is to provide a transmission and a vehicle having the same, with which tilting of gears is unlikely to occur and it is possible to reduce the size and the weight of slide rings.

### SOLUTION TO PROBLEM

A transmission disclosed herein includes: a first rotating shaft; a second rotating shaft arranged parallel to the first rotating shaft; a first gear attached to the first rotating shaft so as to be unrotatable and axially unmovable relative to the first rotating shaft; a second gear that is attached to the second rotating shaft so as to be rotatable and axially unmovable relative to the second rotating shaft and is in mesh with the first gear; and a slide ring that is attached to the second rotating shaft so as to be unrotatable and axially movable relative to the second rotating shaft and is adjacent to the second gear in an axial direction. The slide ring includes an annular portion that is concentric with the second rotating shaft, and a plurality of protruding portions that extend radially inward from the annular portion and are arranged next to each other in a circumferential direction. The second gear includes dogs that protrude in the axial direction. The slide ring includes engagement holes, defined by the annular portion and the protruding portions, into which the dogs are inserted. Distal end portions of the protruding portions of the slide ring are not linked together.

With the transmission described above, since the distal end portions of the protruding portions of the slide ring are not linked together, the protruding portions can bend more in the circumferential direction as compared with a case where the distal end portions are linked together. When a protruding portion receives a large force from a dog, the protruding portion bends in the circumferential direction, thus increasing the amount of force to be received by the other protruding portions from the other dogs. That is, when a protruding portion receives a large force from a dog, the force can be distributed among the other protruding portions. Therefore, forces to be received by the protruding portions from the dogs can be made uniform, and it is possible to reduce the size and the weight of the slide ring.

According to one preferred embodiment, the transmission includes: two or more other first gears that are attached to the first rotating shaft so as to be axially unmovable relative to the first rotating shaft; two or more other second gears that are attached to the second rotating shaft so as to be axially unmovable relative to the second rotating shaft; and another slide ring that is attached to the second rotating shaft so as to be unrotatable and axially movable relative to the second rotating shaft and is adjacent to at least one of the other second gears in the axial direction. All of the other first gears are attached to the first rotating shaft so as to be unrotatable relative to the first rotating shaft. All of the other second gears are attached to the second rotating shaft so as to be rotatable relative to the second rotating shaft. The other slide ring includes an annular portion that is concentric with the second rotating shaft, and a plurality of protruding portions that extend radially inward from the annular portion and are arranged next to each other in the circumferential direction. The other second gears include dogs that protrude in the axial direction. The other slide ring includes engagement holes, defined by the annular portion and the protruding portions, into which the dogs are inserted. The protruding portions of the other slide ring are not linked together.

According to the embodiment described above, a plurality of slide rings are arranged on the same shaft (i.e., the second rotating shaft), it is possible to simplify, and reduce the size of, the mechanism for axially moving the slide rings, as compared with a case where the plurality of slide rings are arranged on different shafts (i.e., the first rotating shaft and the second rotating shaft).

According to the invention, the first rotating shaft is a drive shaft that is driven by a drive source; and the second rotating shaft is a driven shaft that is driven by the drive shaft. According to a preferred embodiment, a diameter of the second gear is larger than a diameter of the first gear.

The dogs are provided on the second gear. According to the embodiment described above, since the diameter of the second gear is larger than the diameter of the first gear, it is easier to ensure a space for the provision of the dogs. Since there is little spatial restriction, it is possible to easily provide dogs that are desirably shaped and sized so as to preferably engage with the engagement holes. It is possible to reduce variations in machining precision of the dogs. Therefore, it is possible to realize a preferable engagement between the dogs and the engagement holes.

According to one preferred embodiment, the slide ring includes six or more protruding portions.

According to the embodiment described above, since the number of protruding portions is relatively large, it is possible to reduce the force to be applied per protruding portion. It is possible to reduce the size and the weight of each protruding portion. With the reduction in size and weight, it is easier to make the protruding portions more bendable. This increases the advantageous effect whereby forces to be received by the protruding portions from the dogs can be made uniform. It is also easy to increase the ratio of the dogs with respect to the engagement holes. By increasing the ratio of the dogs with respect to the engagement holes, the lash (the gap between the dog and the engagement hole with the dogs inserted in the engagement holes, i.e., a play) decreases, thereby reducing the shock while accelerating or decelerating.

According to one preferred embodiment, a radially inner end of the protruding portions of the slide ring is located radially inward relative to a radially inner end of the dogs of the second gear.

According to the embodiment described above, the contact area between the dog and the protruding portion is large. Therefore, it is possible to reduce the surface pressure of the dog and the protruding portion. Thus, it is possible to reduce deterioration of the dogs and the protruding portions.

According to one preferred embodiment, the protruding portions of the slide ring are formed so that a dimension thereof in the circumferential direction decreases while extending radially inward.

According to the embodiment described above, it is possible to obtain protruding portions that are more bendable while ensuring a necessary mechanical strength.

According to one preferred embodiment, a groove is formed on an outer circumferential surface of the slide ring, wherein the groove is depressed radially inward and extending in the circumferential direction. The transmission includes a shift fork that engages with the groove and is axially movable.

According to the embodiment described above, by engaging the shift fork with the groove of the slide ring and moving the shift fork in the axial direction, it is possible to move the slide ring in the axial direction. Thus, it is possible to shift gears. According to the embodiment described above, it is possible to obtain a slide ring with which it is easy to perform gear-shifting operations.

According to one preferred embodiment, the transmission includes a cylindrical collar that is formed separate from the slide ring and the second rotating shaft and is interposed between the slide ring and the second rotating shaft. The collar includes an inner circumferential portion that engages with the second rotating shaft so as to be unrotatable and axially unmovable relative to the second rotating shaft, and an outer circumferential portion including a plurality of depressed portions formed thereon that engage with distal end portions of the protruding portions of the slide ring so as to be axially movable.

According to the embodiment described above, since the collar is interposed between the second rotating shaft and the slide ring, there is no need to form the slide ring itself so as to be unrotatable and axially movable relative to the second rotating shaft. It is possible to simplify the configuration of the second rotating shaft. Machining of the slide ring is easy, and it is possible to improve the machining precision of the protruding portions. According to the embodiment described above, the collar can easily be assembled to the slide ring by engaging the distal end portions of the protruding portions of the slide ring with the depressed portions along the outer circumferential portion of the collar. Since the collar is separate from the slide ring, the collar does not restrict the bending of the protruding portions of the slide ring as compared with a case where the collar is integral with the slide ring.

According to the invention, the first gear and the second gear are helical gears each including a plurality of teeth inclined relative to the axial direction, and are configured so that the second gear receives, from the first gear, a thrust force in a direction toward the slide ring.

According to the embodiment described above, the close contact between the second gear and the slide ring is enhanced while the dogs are in engagement with the engagement holes. Therefore, power is transmitted from the second gear to the slide ring not only through the force by which the dogs push the protruding portions but also through the frictional force between the second gear and the slide ring. It is possible to reduce the force to be received by the protruding portions from the dogs, and it is possible to further reduce the size and the weight of the slide ring.

A vehicle disclosed herein includes: the transmission described above; a drive source that is linked to the first rotating shaft and drives the first rotating shaft; a power transmitting member that is linked to the second rotating shaft; and a driving wheel that is linked to the power transmitting member.

### ADVANTAGEOUS EFFECTS OF INVENTION

According to the present invention, it is possible to provide a transmission and a vehicle having the same, with which tilting of gears is unlikely to occur and it is possible to reduce the size and the weight of slide rings.

### BRIEF DESCRIPTION OF DRAWINGS

FIG. **1** is a side view of a motorcycle according to an embodiment.
FIG. **2** is a cross-sectional view of an internal combustion engine of the motorcycle.
FIG. **3** is a cross-sectional view of a part of a transmission.
FIG. **4a** is a front view of a drive gear, and FIG. **4b** is a cross-sectional view taken along line IVb-IVb of FIG. **4a****.**
FIG. **5a** is a front view of a driven gear, FIG. **5b** is a cross-sectional view taken along line Vb-Vb of FIG. **5a,** and FIG. **5c** is a cross-sectional view taken along line Vc-Vc of FIG. **5a****.**
FIG. **6a** is a front view of a slide ring, and FIG. **6b** is a cross-sectional view taken along line Vlb-Vlb of FIG. **6a****.**
FIG. **7a** is a front view of a collar, and FIG. **7b** is a cross-sectional view taken along line Vllb-Vllb of FIG. **7a****.**
FIG. **8** is a view of a slide ring and a driven gear as seen along the axial direction.
FIG. **9** is a front view of shift forks and a shift drum.
FIG. **10** is a front view of a part of a transmission.
FIG. **11** is a view of a slide ring and a driven gear according to a reference example as seen along the axial direction.
FIG. **12** is a graph showing the relationship between the dog position and the stress for a case where the slide ring of the embodiment is used and a case where the slide ring of the reference example is used.
FIG. 13 is a diagram schematically representing a configuration of a transmission according to a first embodiment.
FIG. 14 is a diagram schematically representing a configuration of a transmission according to a second embodiment.
FIG. 15 is a view of a driven gear and a slide ring of a conventional transmission as seen along the axial direction.

### DESCRIPTION OF EMBODIMENTS

### (First embodiment)

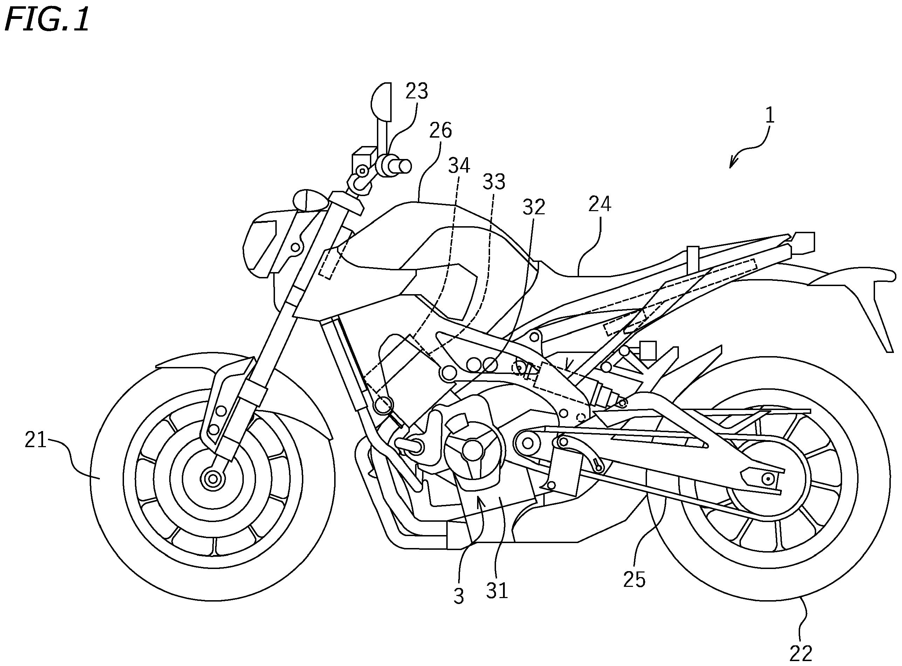

Embodiments will now be described with reference to the drawings. FIG. 1 is a side view of a motorcycle 1, which is an example of the vehicle. The motorcycle 1 includes a front wheel 21, a rear wheel 22, an internal combustion engine (hereinafter "engine") 3, a handle 23, a fuel tank 26, and a seat 24. The engine 3 is linked to the rear wheel 22 by a power transmitting member such as a chain 25. The rear wheel 22 is driven by the engine 3. The engine 3 and the rear wheel 22 are an example of the "drive source" and an example of the "driving wheel", respectively.

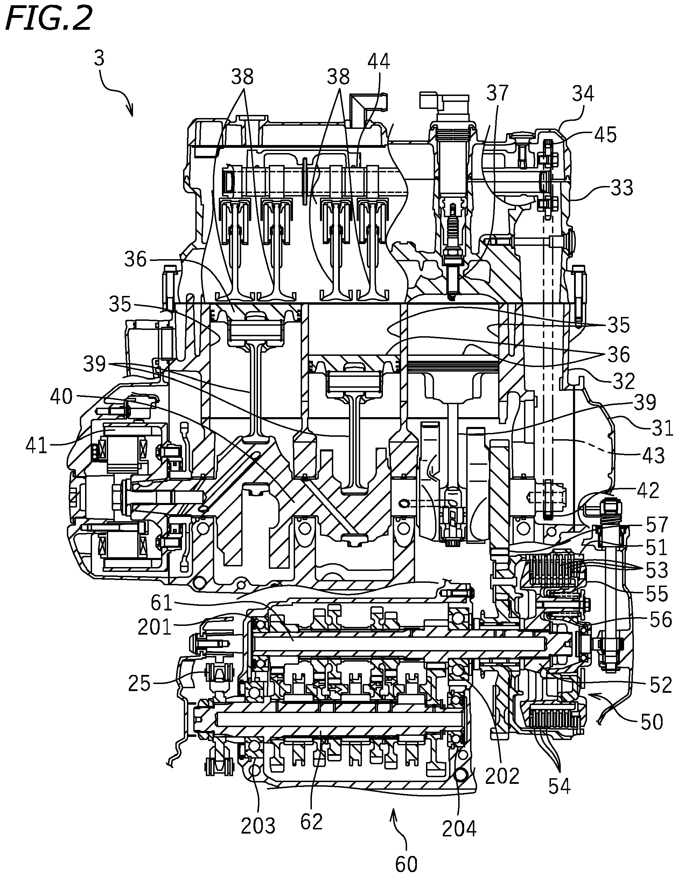

As shown in FIG. 2, the engine 3 includes a crankcase 31, a cylinder body 32 connected to the crankcase 31, a cylinder head 33 connected to the cylinder body 32, and a cylinder head cover 34 connected to the cylinder head 33. The engine 3 is a multi-cylinder engine including a plurality of cylinders 35. Herein, the engine 3 is a 3-cylinder engine. Note however that there is no limitation thereto. The engine 3 may be a single-cylinder engine including only one cylinder 35. The engine 3 may be a water-cooled engine or may be an air-cooled engine.

The cylinder head 33 includes an ignitor 37, an intake valve (not shown) and an exhaust valve 38. The cylinders 35 are provided inside the cylinder body 32. Pistons 36 are accommodated inside the cylinders 35. The pistons 36 are linked to a crankshaft 40 via connecting rods 39. The crankshaft 40 is arranged inside the crankcase 31. The crankshaft 40 extends in the vehicle width direction. A generator 41 is attached to the left end portion of the crankshaft 40. A sprocket 42 is attached to the right end portion of the crankshaft 40. A cam chain 43 is wound around the sprocket 42. Moreover, the cam chain 43 is wound around a sprocket 45 attached to a camshaft 44.

The motorcycle 1 includes a clutch 50. The clutch 50 is attached to a drive shaft 61. Herein, the clutch 50 is attached to the right end portion of the drive shaft 61. The clutch 50 includes a clutch housing 51 that is rotatably attached to the drive shaft 61, a clutch boss 52 that is unrotatably attached to the drive shaft 61, a plurality of first clutch plates 53 that are provided in the clutch housing 51, and a plurality of second clutch plates 54 that are provided on the clutch boss 52.

The first clutch plates 53 and the second clutch plates 54 are arranged alternating with each other in the axial direction of the drive shaft 61. The first clutch plates 53 and the second clutch plates 54 oppose each other. A pressure plate 55 is arranged rightward of the first clutch plates 53 and the second clutch plates 54. The pressure plate 55 is configured to be movable in the axial direction of the drive shaft 61 and is urged leftward by a spring 56. The first clutch plates 53 and the second clutch plates 54 are in close contact with each other by being pressed by the pressure plate 55. Thus, the clutch 50 is connected. When the pressure plate 55 is moved rightward, the first clutch plates 53 and the second clutch plates 54 move away from each other. Thus, the clutch 50 is disconnected.

The clutch housing 51 is in mesh with a gear 57 provided on the crankshaft 40. The clutch housing 51 rotates together with the crankshaft 40. When the clutch 50 is connected, the torque of the crankshaft 40 is transmitted to the drive shaft 61, and the drive shaft 61 is driven by the crankshaft 40. When the clutch 50 is disconnected, the transmission of the torque from the crankshaft 40 to the drive shaft 61 is cut off.

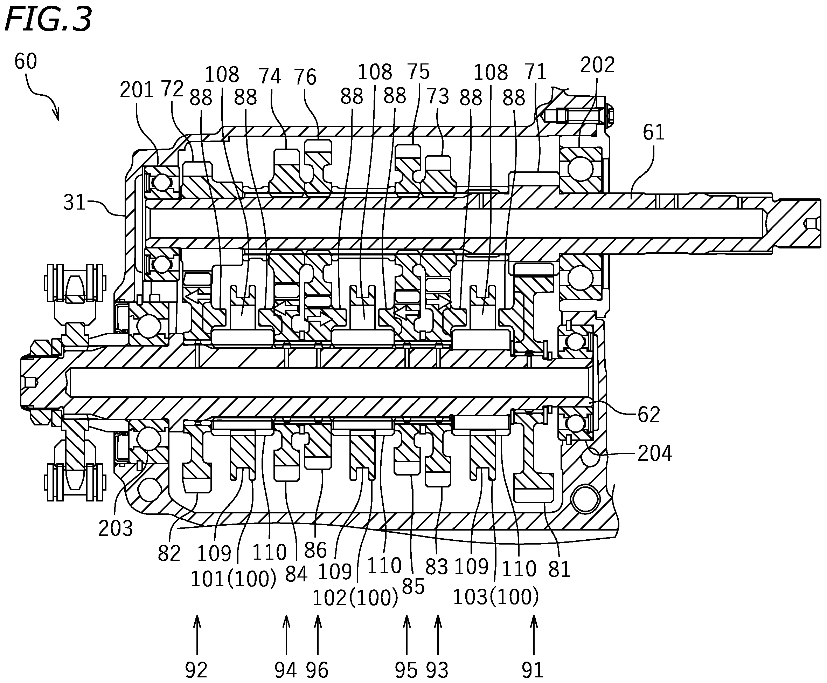

The motorcycle 1 includes a transmission 60. As shown in FIG. 3, the transmission 60 includes the drive shaft 61, a driven shaft 62, a plurality of drive gears 71 to 76, a plurality of driven gears 81 to 86, and a plurality of slide rings 101 to 103. In the present embodiment, the drive shaft 61 corresponds to the "first rotating shaft", and the driven shaft 62 corresponds to the "second rotating shaft". The drive gears 71 to 76 correspond to the "first gear", and the driven gears 81 to 86 correspond to the "second gear". The drive shaft 61 and the driven shaft 62 are arranged parallel to the crankshaft 40. The drive shaft 61 and the driven shaft 62 are arranged parallel to each other.

The drive shaft 61 is rotatably supported by a first bearing 201 and a second bearing 202. The driven shaft 62 is rotatably supported by a third bearing 203 and a fourth bearing 204. The first to fourth bearings 201 to 204 are secured to the crankcase 31.

In the present embodiment, the transmission 60 is a stepped transmission having six speeds. The transmission 60 includes the drive gears 71 to 76 for the first to sixth speeds. The drive gears 71 to 76 are attached to the drive shaft 61 so as to be unrotatable and axially unmovable relative to the drive shaft 61. The drive gears 71 to 76 are configured so as to rotate together with the drive shaft 61. The drive gears 71 to 76 are arranged between the first bearing 201 and the second bearing 202. The diameters of the drive gears 71 to 76 increase in this order. That is, diameter of first-speed drive gear 71 < diameter of second-speed drive gear 72 < diameter of third-speed drive gear 73 < diameter of fourth-speed drive gear 74 < diameter of fifth-speed drive gear 75 < diameter of sixth-speed drive gear 76.

The transmission 60 includes driven gears 81 to 86 for the first speed to the sixth speed. The driven gears 81 to 86 are attached to the driven shaft 62 so as to be rotatable and axially unmovable relative to the driven shaft 62. The driven gears 81 to 86 are configured so that they can idle on the driven shaft 62. The driven gears 81 to 86 are arranged between the third bearing 203 and the fourth bearing 204. The diameters of the driven gears 81 to 86 decrease in this order. That is, diameter of first-speed driven gear 81 > diameter of second-speed driven gear 82 > diameter of third-speed driven gear 83 > diameter of fourth-speed driven gear 84 > diameter of fifth-speed driven gear 85 > diameter of sixth-speed driven gear 86.

The drive gears 71 to 76 for the first speed to the sixth speed are in mesh with the driven gears 81 to 86 for the first speed to the sixth speed, respectively, thereby forming transmission gear pairs 91 to 96 for the first speed to the sixth speed, respectively. The reduction ratios of the transmission gear pairs 91 to 96 for the first speed to the sixth speed decrease in this order. That is, reduction ratio of first transmission gear pair 91 > reduction ratio of second transmission gear pair 92 > reduction ratio of third transmission gear pair 93 > reduction ratio of fourth transmission gear pair 94 > reduction ratio of fifth transmission gear pair 95 > reduction ratio of sixth transmission gear pair 96. The transmission gear pairs 91 to 96 for the first speed to the sixth speed are arranged in the following order, from left to right: the second-speed transmission gear pair 92, the fourth-speed transmission gear pair 94, the sixth-speed transmission gear pair 96, the fifth-speed transmission gear pair 95, the third-speed transmission gear pair 93 and the first-speed transmission gear pair 91.

The first to third slide rings 101 to 103 are attached to the driven shaft 62 so as to be unrotatable and axially movable relative to the driven shaft 62. The first to third slide rings 101 to 103 are configured so as to rotate together with the driven shaft 62. The first slide ring 101 is arranged between the second-speed driven gear 82 and the fourth-speed driven gear 84. The second slide ring 102 is arranged between the sixth-speed driven gear 86 and the fifth-speed driven gear 85. The third slide ring 103 is arranged between the third-speed driven gear 83 and the first-speed driven gear 81.

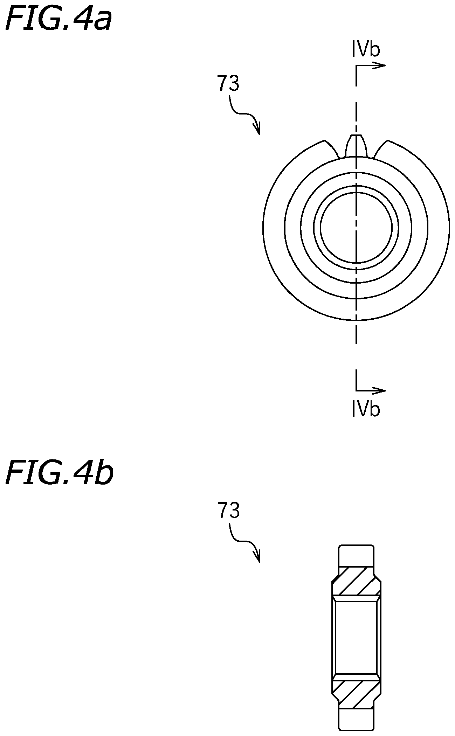

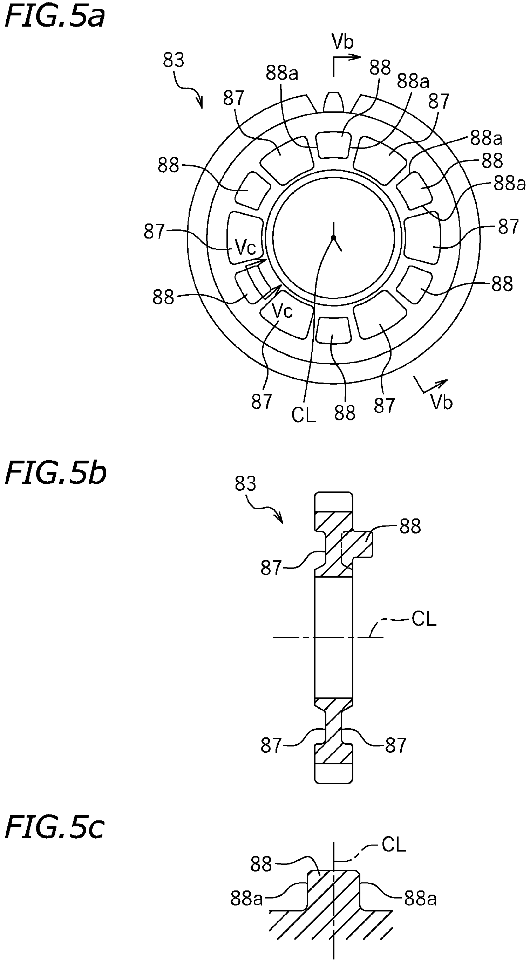

FIG. 4a is a front view (as seen from the right side of FIG. 3) of the third-speed drive gear 73, and FIG. 4b is a cross-sectional view of the third-speed drive gear 73. FIG. 5a is a front view (as seen from the right side of FIG. 3) of the third-speed driven gear 83. FIG. 5b is a cross-sectional view taken along line Vb-Vb of FIG. 5a, and FIG. 5c is a cross-sectional view taken along line Vc-Vc of FIG. 5a. While the drive gear 73 does not include dogs, the driven gear 83 includes dogs 88 protruding in the axial direction (see FIG. 5b). As shown in FIG. 5a, the driven gear 83 includes six dogs 88. These dogs 88 are arranged equidistantly in the circumferential direction. Note that the circumferential direction as used herein refers to the circumferential direction of the driven shaft 62. The dogs 88 are arranged 60° apart from each other. The dogs 88 each have side surfaces 88a. The side surfaces 88a are surfaces that crosses the circumferential direction, and the side surfaces 88a herein extend in the radial direction. Note that the radial direction as used herein refers to the radial direction of the driven shaft 62. In FIG. 5a and FIG. 5c, designation CL represents the axial line. As shown in FIG. 5a and FIG. 5c, the side surfaces 88a of the dogs 88 extend straight in the axial direction (in other words, the direction perpendicular to the sheet of FIG. 5a). The dogs 88 are not inversely tapered. Indentations 87 are formed between dogs 88 adjacent to each other in the circumferential direction. As shown in FIG. 5b, indentations 87 are formed also on the reverse side of the dogs 88. These indentation 87 are formed for the purpose of reducing the weight of the driven gear 83. Note however that the indentations 87 are not always necessary and may be omitted.

Similarly, the other drive gears 71, 72, 74, 75 and 76 do not include dogs, and the other driven gears 81, 82, 84, 85 and 86 include the dogs 88 (see FIG. 3). The dogs 88 provided on the driven gears 81 to 86 protrude toward the slide rings 101 to 103.

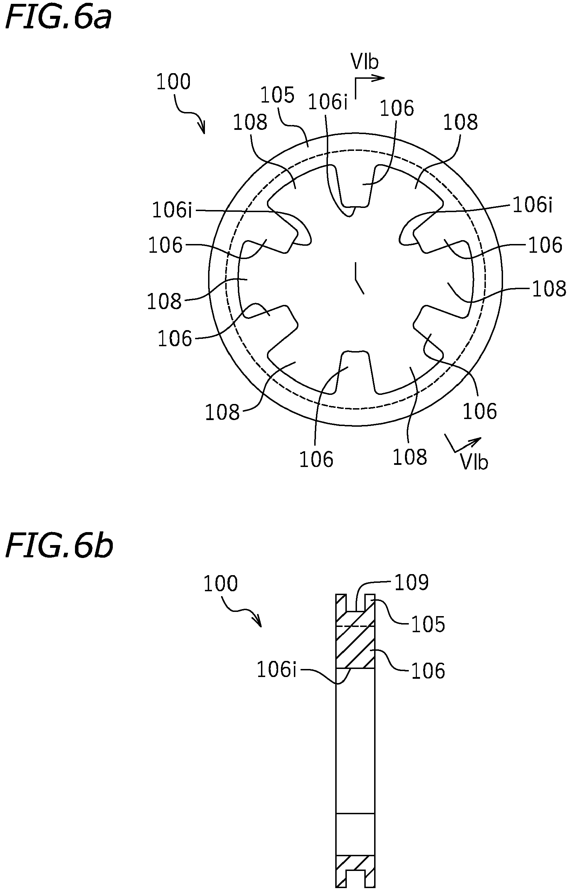

While the configurations of the first to third slide rings 101 to 103 may be different from each other, the first to third slide rings 101 to 103 herein have the same configuration. The first to third slide rings 101 to 103 are each a slide ring 100 shown in FIG. 6a and FIG. 6b. Next, the configuration of the slide ring 100 will be described.

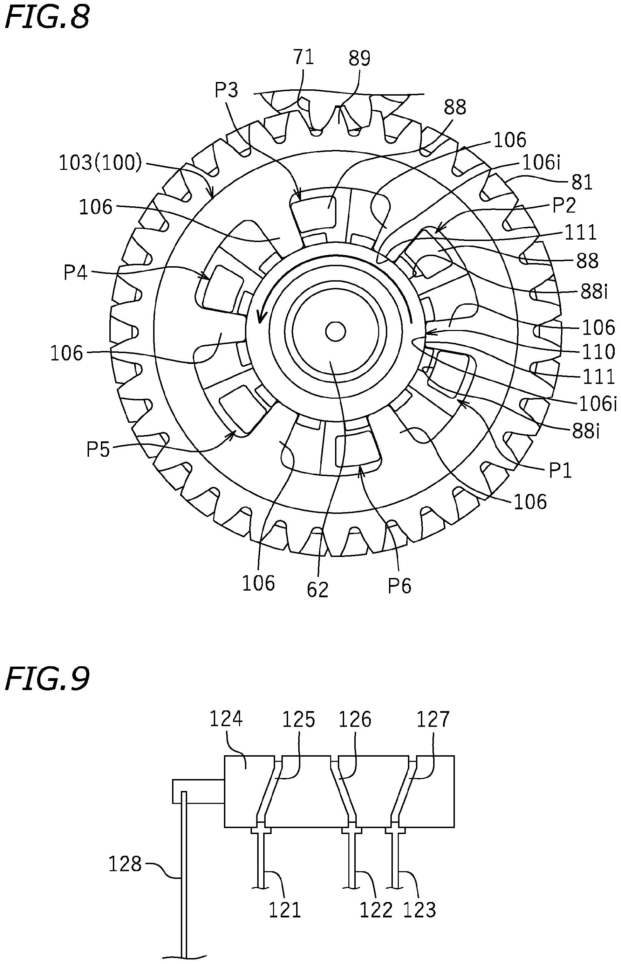

FIG. 6a is a front view of the slide ring 100, and FIG. 6b is a cross-sectional view of the slide ring 100. As shown in FIG. 6a, the slide ring 100 includes an annular portion 105 concentric with the driven shaft 62, and a plurality of protruding portions 106 extending radially inward from the annular portion 105. The protruding portions 106 are arranged next to each other in the circumferential direction. In the present embodiment, six protruding portions 106 are arranged equidistantly in the circumferential direction. The protruding portions 106 are arranged 60° apart from each other. The slide ring 100 includes engagement holes 108, defined by the annular portion 105 and the protruding portions 106, into which the dogs 88 are inserted. Herein, the slide ring 100 includes six engagement holes 108. The radially outward end of the engagement holes 108 is delimited by the annular portion 105. The opposing ends of the engagement holes 108 in the circumferential direction are delimited by protruding portions 106. The radially inward end of the engagement holes 108 is open. The radially inner end 106i of the protruding portions 106 of the slide ring 100 is located radially inward relative to the radially inner end 88i of the dogs 88 of the driven gears 81 to 86 (see FIG. 8). The protruding portions 106 of the slide ring 100 are formed so that the dimension thereof in the circumferential direction decreases while extending radially inward.

As shown in FIG. 6b, a groove 109 is formed on the outer circumferential surface of the slide ring 100. The groove 109 is depressed radially inward and extends in the circumferential direction.

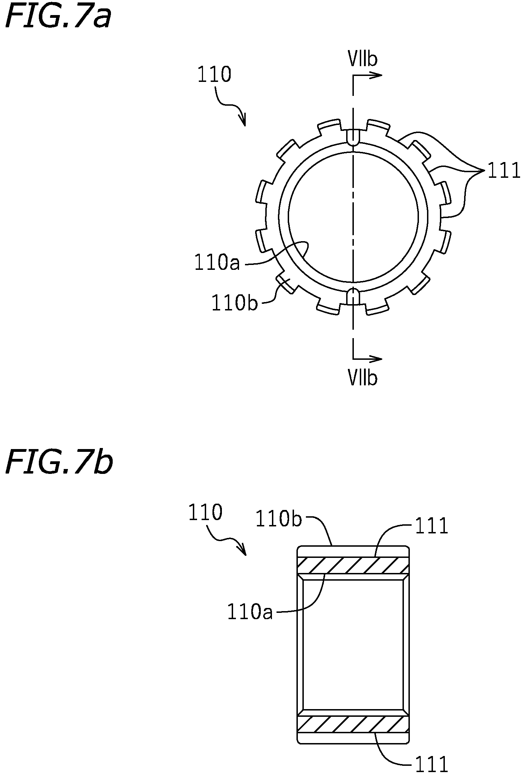

As shown in FIG. 3, a cylindrical collar 110 is interposed between the slide ring 100 and the driven shaft 62. The slide ring 100 is attached to the driven shaft 62 with the collar 110 therebetween. FIG. 7a is a front view of the collar 110, and FIG. 7b is a cross-sectional view of the collar 110. The collar 110 includes an inner circumferential portion 110a, which engages with the driven shaft 62 so as to be unrotatable and axially unmovable relative to the driven shaft 62, and an outer circumferential portion 110b including a plurality of depressed portions 111 formed thereon.

As shown in FIG. 8, the distal end portion of the protruding portion 106 of the slide ring 100 is inserted into the depressed portion 111 of the collar 110. The protruding portion 106 engages with the outer circumferential portion 110b of the collar 110. The slide ring 100 engages with the collar 110 so as to be axially slidable and circumferentially unslidable relative to the collar 110. The collar 110 is secured to the driven shaft 62 so as to rotate together with the driven shaft 62. Therefore, the slide ring 100 rotates together with the driven shaft 62 and the collar 110. Note that while the protruding portion 106 of the slide ring 100 engages with the depressed portion 111 of the collar 110, the protruding portion 106 can slightly bend in the circumferential direction. The protruding portion 106 of the slide ring 100 and the depressed portion 111 of the collar 110 engage with each other so as to allow bending deformation of the protruding portion 106 in the circumferential direction.

As shown in FIG. 9, the transmission 60 includes a first shift fork 121, a second shift fork 122, a third shift fork 123 and a shift drum 124. The shift drum 124 includes a first guide groove 125, a second guide groove 126 and a third guide groove 127. The proximal end portions of the first to third shift forks 121 to 123 engage with the first to third guide grooves 125 to 127, respectively. Although not shown in the figure, the distal end portion of the first shift fork 121 engages with the groove 109 of the first slide ring 101, the distal end portion of the second shift fork 122 engages with the groove 109 of the second slide ring 102, and the distal end portion of the third shift fork 123 engages with the groove 109 of the third slide ring 103. A rod 128 for rotating the shift drum 124 is linked to the shift drum 124. As the shift drum 124 rotates, the first to third shift forks 121 to 123 move left and right along the first to third guide grooves 125 to 127. Together with this, the first to third slide rings 101 to 103 in engagement with the first to third shift forks 121 to 123 move left and right.

As shown in FIG. 3, the third slide ring 103 is arranged leftward of the first-speed driven gear 81. When the third slide ring 103 moves rightward, the dogs 88 of the driven gear 81 are inserted into the engagement holes 108 of the third slide ring 103. The driven gear 81 is always rotating since it is in mesh with the drive gear 71. Therefore, as shown in FIG. 8, the dogs 88 revolve around the center of the driven shaft 62, and are in contact with the protruding portions 106 of the third slide ring 103. As the protruding portions 106 are pushed by the dogs 88, power is transmitted from the driven gear 81 to the third slide ring 103, and the third slide ring 103 rotates together with the driven gear 81. As the dogs 88 engage with the engagement holes 108, power is transmitted from the drive shaft 61 to the driven shaft 62 via the first-speed transmission gear pair 91, thus driving the driven shaft 62.

This similarly applies to the second-speed to sixth-speed transmission gear pairs 92 to 96. That is, as the first slide ring 101 moves leftward, the dogs 88 of the second-speed driven gear 82 are inserted into the engagement holes 108 of the first slide ring 101. Thus, power is transmitted from the drive shaft 61 to the driven shaft 62 via the second-speed transmission gear pair **92.** That is, as the third slide ring **103** moves leftward, the dogs **88** of the third-speed driven gear **83** are inserted into the engagement holes **108** of the third slide ring **103.** Thus, power is transmitted from the drive shaft **61** to the driven shaft **62** via the third-speed transmission gear pair **93.** As the first slide ring **101** moves rightward, the dogs **88** of the fourth-speed driven gear **84** are inserted into the engagement holes **108** of the first slide ring **101.** Thus, power is transmitted from the drive shaft **61** to the driven shaft **62** via the fourth-speed transmission gear pair **94.** As the second slide ring **102** moves rightward, the dogs **88** of the fifth-speed driven gear **85** are inserted into the engagement holes **108** of the second slide ring **102.** Thus, power is transmitted from the drive shaft **61** to the driven shaft **62** via the fifth-speed transmission gear pair **95.** As the second slide ring **102** moves leftward, the dogs **88** of the sixth-speed driven gear **86** are inserted into the engagement holes **108** of the second slide ring **102.** Thus, power is transmitted from the drive shaft **61** to the driven shaft **62** via the sixth-speed transmission gear pair **96.**

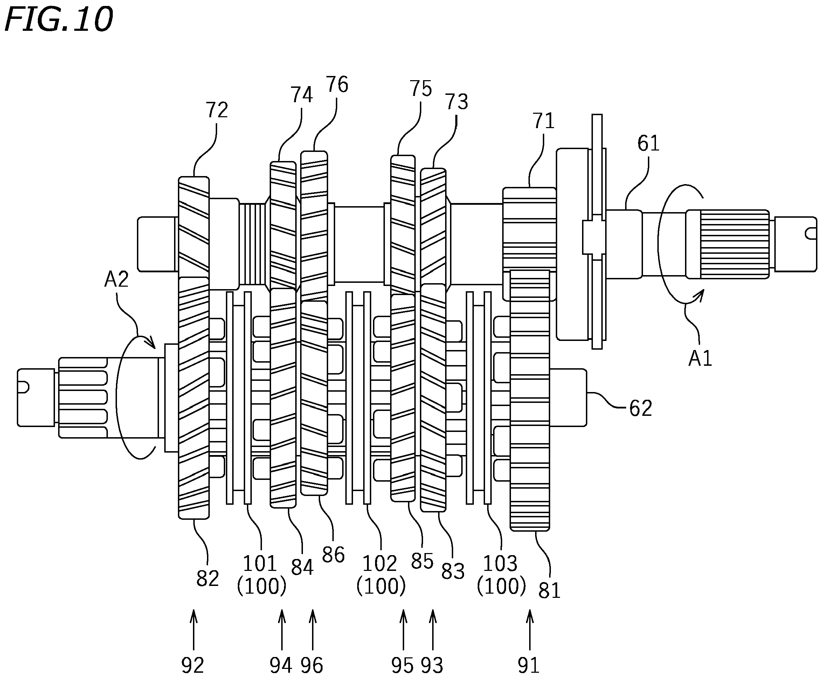

As shown in FIG. **10****,** the drive gear **71** and the driven gear **81** for the first speed are spur gears. The drive gears **72** to **76** and the driven gears **82** to **86** for the second speed to the sixth speed are helical gears. A spur gear is a gear including a plurality of teeth that are parallel to the axial direction. On the other hand, a helical gear is a gear including a plurality of teeth that are inclined relative to the axial direction.

Hereinafter, the inclination of the teeth relative to the axial direction will be referred to as the inclination angle of the helical gear. While there is no particular limitation to the inclination angle of the helical gear, it is set in the range of 5° to 30° in the present embodiment. Herein, the inclination angles of the helical gears are set so that the inclination angle is smaller for a higher gear number. Herein, the inclination angles of the second-speed to sixth-speed drive gears **72** to **76** decrease in this order. That is, inclination angle of second-speed drive gear **72** > inclination angle of third-speed drive gear **73** > inclination angle of fourth-speed drive gear **74** > inclination angle of fifth-speed drive gear **75** > inclination angle of sixth-speed drive gear **76.** The inclination angles of the second-speed to sixth-speed driven gears **82** to **86** decrease in this order. That is, inclination angle of second-speed driven gear **82** > inclination angle of third-speed driven gear **83** > inclination angle of fourth-speed driven gear **84** > inclination angle of fifth-speed driven gear **85** > inclination angle of sixth-speed driven gear **86.** Note however that there is no particular limitation on the order of inclination angle between the drive gears **72** to **76** and the order of inclination angle between the driven gears **82** to **86.**

Typically, a helical gear has a higher mechanical strength than a spur gear. A helical gear can be made with a smaller thickness than a spur gear. Note that the thickness of a gear refers to the dimension of the gear in the axial direction. In the present embodiment, as shown in FIG. **10****,** the thickness of the second-speed to sixth-speed drive gears **72** to **76** is smaller than the thickness of the first-speed drive gear **71.** The thickness of the second-speed to sixth-speed driven gears **82** to **86** is smaller than the thickness of the first-speed driven gear 81.

Since the teeth of helical gears are inclined from the axial direction, a helical gear receives a force in the rotation direction and a force in the axial direction at the same time from another, meshing helical gear. Thus, the second-speed to sixth-speed driven gears **82** to **86** receive a force in the rotation direction and a force in the axial direction from the second-speed to sixth-speed drive gears **72** to **76,** respectively.

In FIG. **10****,** the drive shaft **61** rotates in the direction of arrow **A1,** and the driven shaft **62** rotates in the direction of arrow **A2.** In FIG. **10****,** the rotation direction **A1** of the drive gears **71** to **76** is downward, and the rotation direction **A2** of the driven gears **81** to **86** is upward. The teeth of the third-speed drive gear **73** are inclined from the axial direction so as to extend leftward while extending downward in FIG. **10****.** The teeth of the third-speed driven gear **83** are inclined from the axial direction so as to extend leftward while extending upward in FIG. **10****.** That is, the teeth of the third-speed drive gear **73** are inclined from the axial direction so as to extend toward the opposite side from the third slide ring **103** while extending toward the rotation direction **A1,** and the teeth of the third-speed driven gear **83** are inclined from the axial direction so as to extend toward the opposite side from the third slide ring **103** while extending toward the rotation direction **A2.** The third-speed drive gear **73** and the driven gear **83** are configured so that the driven gear **83** receives, from the drive gear **73,** a thrust force in the direction toward the third slide ring **103.** When the dogs **88** of the third-speed driven gear **83** are in engagement with the engagement holes **108** of the third slide ring **103,** the driven gear **83** is pushed by the drive gear **73** toward the third slide ring **103,** thereby preventing the dogs **88** from inadvertently coming off the engagement holes **108.**

The teeth of the fourth-speed drive gear **74** are inclined from the axial direction so as to extend toward the opposite side from the first slide ring **101** while extending toward the rotation direction **A1,** and the teeth of the fourth-speed driven gear **84** are inclined from the axial direction so as to extend toward the opposite side from the first slide ring **101** while extending toward the rotation direction **A2.** The fourth-speed drive gear **74** and the driven gear **84** are configured so that the driven gear **84** receives, from the drive gear **74,** a thrust force in the direction toward the first slide ring **101.** When the dogs **88** of the fourth-speed driven gear **84** are in engagement with the engagement holes **108** of the first slide ring **101,** the driven gear **84** is pushed by the drive gear **74** toward the first slide ring **101,** thereby preventing the dogs **88** from inadvertently coming off the engagement holes **108.**

The teeth of the fifth-speed drive gear **75** are inclined from the axial direction so as to extend toward the opposite side from the second slide ring **102** while extending toward the rotation direction **A1,** and the teeth of the fifth-speed driven gear **85** are inclined from the axial direction so as to extend toward the opposite side from the second slide ring **102** while extending toward the rotation direction **A2.** The fifth-speed drive gear **75** and the driven gear **85** are configured so that the driven gear **85** receives, from the drive gear **75,** a thrust force in the direction toward the second slide ring **102.** When the dogs **88** of the fifth-speed driven gear **85** are in engagement with the engagement holes **108** of the second slide ring **102,** the driven gear **85** is pushed by the drive gear **75** toward the second slide ring **102,** thereby preventing the dogs **88** from inadvertently coming off the engagement holes **108.**

The teeth of the sixth-speed drive gear **76** are inclined from the axial direction so as to extend toward the opposite side from the second slide ring **102** while extending toward the rotation direction **A1,** and the teeth of the sixth-speed driven gear **86** are inclined from the axial direction so as to extend toward the opposite side from the second slide ring **102** while extending toward the rotation direction **A2.** The sixth-speed drive gear **76** and the driven gear **86** are configured so that the driven gear **86** receives, from the drive gear **76,** a thrust force in the direction toward the second slide ring **102.** When the dogs **88** of the sixth-speed driven gear **86** are in engagement with the engagement holes **108** of the second slide ring **102,** the driven gear **86** is pushed by the drive gear **76** toward the second slide ring **102,** thereby preventing the dogs **88** from inadvertently coming off the engagement holes **108.**

The second-speed drive gear **72** is press-fit to the drive shaft **61.** The drive gear **72** and the driven gear **82** are an example of the "first press-fit gear" and the "second mesh gear", respectively. The teeth of the second-speed drive gear **72** are inclined from the axial direction toward the first slide ring **101** (herein, the right side) while extending toward the rotation direction **A1,** and the teeth of the second-speed driven gear **82** are inclined from the axial direction toward the first slide ring **101** (herein, the right side) while extending toward the rotation direction **A2.** The drive gear **72** gives a leftward force to the driven gear **82,** and receives a rightward force from the driven gear **82** as a reaction force. The drive gear **72** and the driven gear **82** for the second speed are configured so that the drive gear **72** receives a rightward thrust force from the driven gear **82.** This prevents the drive gear **72,** which is press-fit to the drive shaft **61,** from shifting toward the first bearing **201** (see FIG. **3****),** thereby preventing a large thrust load from being applied to the first bearing **201.**

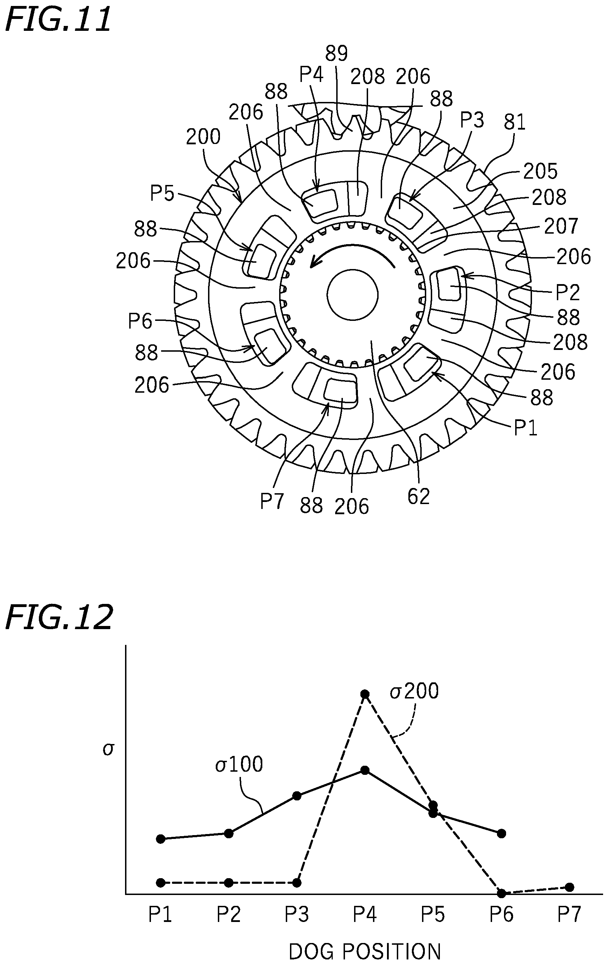

While each of the first to third slide rings **101** to **103** is the slide ring **100** (see FIG. **6a****),** it may be a slide ring **200** as shown in FIG. **11****,** instead of the slide ring **100.** The slide ring **200** includes an annular portion **205** and a plurality of protruding portions **206** extending radially inward from the annular portion **205,** and further includes an inner ring portion **207.** The distal end portion of each protruding portion **206** is connected to the inner ring portion **207.** Engagement holes **208** are defined by the annular portion **205,** the inner ring portion **207** and the protruding portions **206.** The distal end portions of the protruding portions **206** are linked together by the inner ring portion **207.** With the slide ring **200,** the distal end portions of the protruding portions **206** are restrained by the inner ring portion **207,** thereby restricting the bending of the protruding portions **206** in the circumferential direction.

While the dogs **88** are arranged around the center of each of the driven gears **81** to **86,** the center of arrangement of the dogs **88** and the center of the driven gear may be misaligned with each other due to variations in machining precision, etc. Hereinafter, such a misalignment will be referred to as an axial misalignment. Herein, when a torque is transmitted from the driven gear **81** to the slide ring **200,** for example, the torque is distributed among the six protruding portions **206** of the slide ring **200.** However, when there is an axial misalignment, the load varies between the protruding portions **206** so that some protruding portions **206** receive a larger load than other protruding portions **206.** This increases the maximum load to be instantaneously received by a protruding portion **206,** and there is a need to increase the rigidity of the slide ring **200** in advance. Therefore, the size and the weight of the slide ring **200** increase.

The present inventor conducted an experiment of measuring stresses on the proximal portions of the dogs **88** for the slide ring **200** including the inner ring portion **207** and for the slide ring **100** of the present embodiment. Specifically, the present inventor conducted an experiment of measuring stresses on the dogs **88** located at the first position **P1** to the seventh position **P7** using the slide ring **200** as shown in FIG. **11****.** The present inventor also conducted an experiment of measuring stresses on the dogs **88** located at the first position **P1** to the seventh position **P6** using the slide ring **100** as shown in FIG. **8****.** In these experiments, a driven gear with an axial misalignment was used. Note that as the driven gear rotates, the dogs **88** revolve around the center, and the positions of the dogs **88** change over time.

FIG. **12** shows a distribution o100 of stresses σ on the dogs **88** located at the first to sixth positions **P1** to **P6** for the slide ring **100,** and a distribution σ200 of stresses σ on the dogs **88** located at the first to seventh positions **P1** to **P7** for the slide ring **200.** As shown in FIG. **12****,** it was found that when using the slide ring **200,** stresses σ on the dogs **88** vary significantly, with a very high stress σ on the dog **88** at the fourth position **P4.** Note that the fourth position **P4** is a position that is on the rotation direction side of the meshing portion **89** between the drive gear and the driven gear, and is a position that is closest to the meshing portion. In contrast, it was found that when using the slide ring **100,** stresses σ on the dogs **88** do not vary significantly, with the maximum value of the stress σ on the dog **88** being reduced.

With the slide ring **100** according to the present embodiment, the distal end portions of the protruding portions **106** are not linked together, and the protruding portions **106** can bend in the circumferential direction. It is presumed that when there is a high stress on the dog **88** at the fourth position **P4,** the protruding portion **106** in contact with the dog **88** at the fourth position **P4** bends in the circumferential direction, thereby reducing the load on this protruding portion **106** while increasing the load on the other protruding portions **106.** Thus, the load is distributed among the protruding portions **106,** and becomes relatively uniform. Thus, the maximum load on the protruding portion **106** is reduced. With the slide ring **100,** there is no need to configure the protruding portions **106** so as to be able to withstand a large load as compared with conventional techniques. Thus, it is possible to reduce the size and the weight of the slide ring **100.**

As described above, with the transmission **60** according to the present embodiment, the slide ring **100** includes the engagement holes **108,** into which the dogs **88** are inserted, defined by the annular portion **105** and the protruding portions **106.** The distal end portions of the protruding portions **106** of the slide ring **100** are not linked together. Therefore, the protruding portions **106** can bend more in the circumferential direction as compared with a case where the distal end portions are linked together. When a protruding portion **106** receives a large force from a dog **88,** the protruding portion **106** bends, thus increasing the amount of force to be received by the other protruding portions **106** from the dogs **88.** When a protruding portion **106** receives a large force from a dog **88,** the force can be distributed among the other protruding portions **106.** Therefore, forces to be received by the protruding portions **106** from the dogs **88** can be made uniform, and it is possible to reduce the size and the weight of the slide ring **100.**

According to the present embodiment, the first to third slide rings **101** to **103** are arranged on the same shaft (i.e., the driven shaft **62),** it is possible to simplify, and reduce the size of, the shift forks **121** to **123** and the shift drum **124,** as compared with a case where the first to third slide rings **101** to **103** are arranged separately on the drive shaft **61** and on the driven shaft **62.**

According to the present embodiment, the dogs **88** are provided on the driven gears **81** to **86.** Since the diameters of the driven gears **81** to **86** are larger than those of the drive gears **71** to **76,** it is easier to ensure a space for the provision of the dogs **88.** According to the present embodiment, since there is little spatial restriction for the provision of the dogs **88,** it is possible to easily provide dogs **88** that are desirably shaped and sized so as to preferably engage with the engagement holes **108.** Since there is little spatial restriction, machining of the dogs **88** is easy. It is possible to reduce variations in machining precision of the dogs **88.** Therefore, it is possible to realize a preferable engagement between the dogs **88** and the engagement holes **108.**

Although there is no particular limitation to the number of protruding portions **106** of the slide ring **100,** it is six in the present embodiment. Since the number of protruding portions **106** is relatively large, it is possible to reduce the force to be applied to one protruding portion **106.** Therefore, it is possible to reduce the size and the weight of each protruding portion **106.** With the reduction in size and weight, it is easier to make the protruding portions **106** more bendable. This increases the advantageous effect whereby forces to be received by the protruding portions **106** from the dogs **88** can be made uniform. It is also easy to increase the ratio of the volume of the dogs **88** with respect to the volume of the engagement holes **108.** By increasing the ratio of the volume of the dogs **88** with respect to the volume of the engagement holes **108,** the lash (the gap between the dog **88** and the wall surface of the engagement hole **108** with the dog **88** inserted in the engagement hole **108,** i.e., a play) decreases, thereby reducing the shock while accelerating or decelerating.

According to the present embodiment, as shown in FIG. **8****,** the radially inner end **106i** of the protruding portions **106** of the slide ring **100** is located radially inward relative to the radially inner end **88i** of the dogs **88** of the driven gears **81** to **86.** The contact area between the dog **88** and the protruding portion **106** is large. Therefore, it is possible to reduce the surface pressure of the dog **88** and the protruding portion **106.** Thus, it is possible to reduce deterioration of the dogs **88** and the protruding portions **106.**

According to the present embodiment, each protruding portion **106** of the slide ring 100 is formed so that the dimension thereof in the circumferential direction decreases while extending radially inward. Therefore, it is possible to obtain protruding portions **106** that are more bendable while ensuring a necessary mechanical strength.

According to the present embodiment, the groove **109** is formed on the outer circumferential surface of the slide ring **100,** wherein the groove **109** is depressed radially inward and extending in the circumferential direction. By engaging the shift forks **121** to **123** with the grooves **109** of the first to third slide rings **101** to **103** and moving the shift forks **121** to **123** in the axial direction, it is possible to move the first to third slide rings **101** to **103** in the axial direction. Thus, it is possible to shift gears. According to the present embodiment, it is possible to obtain the slide ring **100** with which it is easy to perform gear-shifting operations.

According to the present embodiment, since the collar **110** is interposed between the driven shaft **62** and the slide ring **100,** there is no need to form the slide ring **100** itself so as to be unrotatable and axially movable relative to the driven shaft **62.** Therefore, it is possible to simplify the configuration of the driven shaft **62.** Machining of the slide ring **100** is easy, and it is possible to improve the machining precision of the protruding portions **106.** According to the present embodiment, the collar **110** can easily be assembled to the slide ring **100** by engaging the distal end portions of the protruding portions **106** of the slide ring **100** with the depressed portions **111** along the outer circumferential portion of the collar **110.** Since the collar **110** is separate from the slide ring **100,** the collar **110** does not restrict the bending of the protruding portions **106** of the slide ring **100** as compared with a case where the collar **110** is integral with the slide ring **100.**

According to the present embodiment, the drive gears **72** to **76** and the driven gears **82** to **86** for the second speed to the sixth speed are helical gears. Of those gears, the drive gears **73** to **76** and the driven gears **83** to **86** for the third speed to the sixth speed are configured so that the driven gears **83** to **86** receive, from the respective drive gears **73** to **76,** a thrust force in the direction toward the slide rings **101** to **103,** which the driven gears **83** to **86** are adjacent to. According to the present embodiment, the close contact between the driven gears **83** to **86** and the slide rings **101** to **103** is enhanced while the dogs **88** are in engagement with the engagement holes **108.** Therefore, power is transmitted from the driven gears **83** to **86** to the slide rings **101** to **103** not only through the force by which the dogs **88** push the protruding portions **106** but also through the frictional force between the driven gears **83** to **86** and the slide rings **101** to **103.** Therefore, it is possible to reduce the force to be received by the protruding portions **106** from the dogs **88,** and it is possible to further reduce the size and the weight of the slide ring **100.**

While a transmission and a vehicle according to one embodiment have been described above, the embodiment described above is merely an example, and various other embodiments are possible. Next, other example embodiments will be described briefly.

### (Second embodiment)

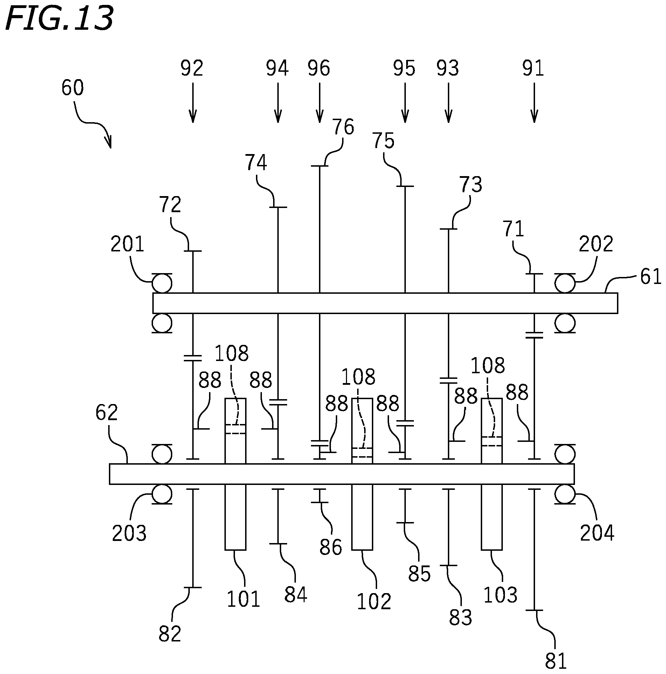

FIG. **13** is a diagram schematically representing a portion of the transmission **60** according to the embodiment described above. As shown in FIG. **13****,** in the embodiment described above, the first to third slide rings **101** to **103** are attached to the driven shaft **62.** No slide ring is attached to the drive shaft **61.** The drive shaft **61,** the driven shaft **62,** the drive gears **71** to **76** and the driven gears **81** to **86** correspond to the "first rotating shaft", the "second rotating shaft", the "first gear" and the "second gear", respectively.

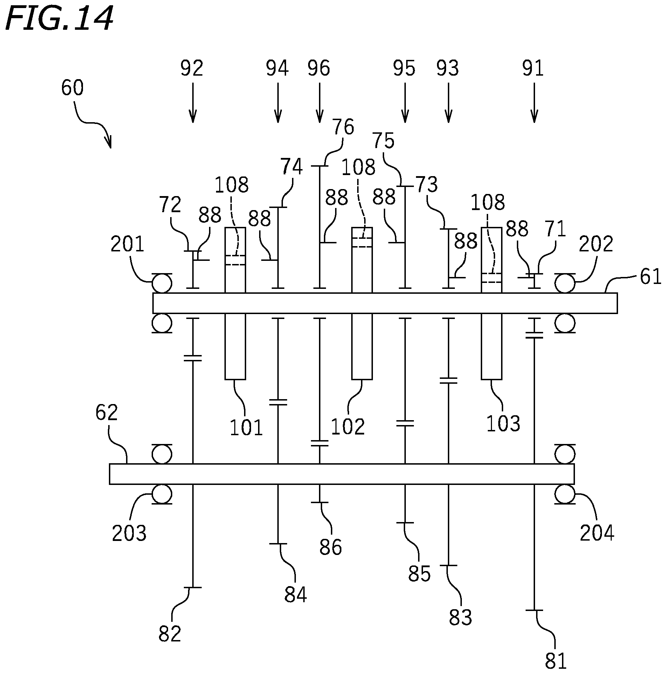

In the embodiment shown in FIG. **14****,** the first to third slide rings **101** to **103** are attached to the drive shaft **61,** and no slide ring is attached to the driven shaft **62.** In the present embodiment, the drive gears **71** to **76** are attached to the drive shaft **61** so as to be rotatable and axially unmovable relative to the drive shaft **61.** The driven gears **81** to **86** are attached to the driven shaft **62** so as to be unrotatable and axially unmovable relative to the driven shaft **62.** The first to third slide rings **101** to **103** are attached to the drive shaft **61** so as to be unrotatable and axially movable relative to the drive shaft **61.** In the present embodiment, the driven shaft **62** and the drive shaft **61** correspond to the "first rotating shaft" and the "second rotating shaft", respectively. The driven gears **81** to **86** correspond to the "first gear", and the drive gears **71** to **76** correspond to the "second gear". In the present embodiment, power is transmitted in the following order: the drive shaft **61,** the slide rings **101** to **103,** the drive gears **71** to **76,** the driven gears **81** to **86,** and the driven shaft **62.** For example, when the gear position is at the first speed, the dogs **88** of the first-speed drive gear **71** engage with the engagement holes **108** of the third slide ring **103.** Then, power is transmitted in the following order: the drive shaft **61,** the third slide ring **103,** the first-speed drive gear **71,** the first-speed driven gear **81,** and the driven shaft **62.**

In the first embodiment, since power is transmitted from the driven gear to the slide ring 100, as shown in FIG. **8****,** the dogs **88** push the protruding portions **106** of the slide ring **100.** Therefore, the side surface **88a** of each dog **88** on the rotation direction side is the contact surface at which the dog **88** contacts with the protruding portion **106** of the slide ring **100.** On the other hand, in the present embodiment, since power is transmitted from the slide ring **100** to the drive gear, the protruding portions **106** of the slide ring **100** push the dogs **88.** Therefore, the side surface **88a** of each dog **88** on the opposite side from the rotation direction side is the contact surface at which the dog **88** contacts with the protruding portion **106** of the slide ring **100.** Note that also in the present embodiment, the contact surfaces of the dogs **88** extend straight in the axial direction. The dogs **88** are not inversely tapered.

Also in the second embodiment, the drive gears **72** to **76** and the driven gears **82** to **86** for the second speed to the sixth speed are helical gears. In the present embodiment, the drive gear **73** and the driven gear **83** for the third speed are configured so that the drive gear **73** receives, from the driven gear **83,** a thrust force in the direction toward the third slide ring **103.** The teeth of the third-speed drive gear **73** are inclined from the axial direction so as to extend toward the third slide ring **103** while extending toward the rotation direction side. The drive gear **74** and the driven gear **84** for the fourth speed are configured so that the drive gear **74** receives, from the driven gear **84,** a thrust force in the direction toward the first slide ring **101.** The teeth of the fourth-speed drive gear **74** are inclined from the axial direction so as to extend toward the first slide ring **101** while extending toward the rotation direction side. The drive gear **75** and the driven gear **85** for the fifth speed are configured so that the drive gear **75** receives, from the driven gear **85,** a thrust force in the direction toward the second slide ring **102.** The teeth of the fifth-speed drive gear **75** are inclined from the axial direction so as to extend toward the second slide ring **102** while extending toward the rotation direction side. The drive gear **76** and the driven gear **86** for the sixth speed are configured so that the drive gear **76** receives, from the driven gear **86,** a thrust force in the direction toward the second slide ring **102.** The teeth of the sixth-speed drive gear **76** are inclined from the axial direction so as to extend toward the second slide ring **102** while extending toward the rotation direction side.

### (Other embodiments)

In the first embodiment, all of the slide rings **101** to **103** are attached to the driven shaft **62.** In the second embodiment, all of the slide rings **101** to **103** are attached to the drive shaft **61.** That is, in the first embodiment and in the second embodiment, all of the slide rings **101** to **103** are attached to the same rotating shaft. However, one or more of the slide rings **101** to **103** may be attached to the drive shaft **61,** with the remainder attached to the driven shaft **62.** The slide rings **101** to **103** may be attached to different rotational shafts.

The number of protruding portions **106** of the slide ring **100** is not limited to six. The number of protruding portions **106** may be less than six or may be more than six.

The radially inner end of the protruding portions **106** of the slide ring **100** may be located radially outward relative to the radially inner end of the dogs **88.** The radially inner end of the protruding portions **106** and the radially inner end of the dogs **88** may be at the same position for the radial direction.

There is no particular limitation to the shape of the dogs **88** and the shape of the protruding portions **106.** In the embodiment described above, the dogs **88** are formed so that the dimension thereof in the circumferential direction decreases while extending radially inward. However, the dogs **88** do not always need to be formed so that the dimension thereof in the circumferential direction decreases while extending radially inward. The protruding portions **106** do not always need to be formed so that the dimension thereof in the circumferential direction decreases while extending radially inward.

The slide ring **100** does not always need to include the groove **109.** For example, the shift fork may be configured to push the side surface of the slide ring **100** in the axial direction.

While the collar **110** is interposed between the slide ring **100** and the driven shaft **62** in the first embodiment, the collar **110** is not always necessary. The slide ring **100** may be attached directly to the driven shaft **62.** In the second embodiment, the slide ring **100** may be attached directly to the drive shaft **61.**

In the embodiment described above, the drive gear **71** and the driven gear **81** for the first speed may be helical gears, as are the drive gears **72** to **76** and the driven gears **82** to **86** for the second speed to the sixth speed. At least one pair of the drive gears **72** to **76** and the driven gears **82** to **86** may be spur gears, as are the drive gear **71** and the driven gear **81.** All of the drive gears **71** to **76** and the driven gears **81** to **86** may be spur gears.

While the second-speed transmission gear pair **92,** the fourth-speed transmission gear pair **94,** the sixth-speed transmission gear pair **96,** the fifth-speed transmission gear pair **95,** the third-speed transmission gear pair **93** and the first-speed transmission gear pair **91** are arranged in this order from left to right in the embodiment described above, there is no particular limitation thereto. They may be arranged in that order from right to left. The order of arrangement is also not limited to the order above.

While the dogs **88** are not inversely tapered in the embodiment described above, the dogs **88** may be inversely tapered.

The vehicle is not limited to the motorcycle 1. The vehicle may be a straddled vehicle other than a motorcycle. Note that a straddled vehicle refers to a vehicle that is straddled by a passenger. The vehicle is not limited to a straddled vehicle, but may be a vehicle of any other form. The vehicle may be an auto tricycle, an auto quadricycle, an ATV (All Terrain Vehicle), or a snowmobile, for example.

### REFERENCE SIGNS LIST

1: Motorcycle, 3: Internal combustion engine, 22: Rear wheel, 25: Chain, 60: Transmission, 61: Drive shaft, 62: Driven shaft, 71 to 76: Drive gear, 81 to 86: Driven gear, 88: Dog, 100 to 104: Slide ring, 105: Annular portion, 106: Protruding portion, 108: Engagement hole, 109: Groove, 110: Collar, 110a: Inner circumferential portion of collar, 110b: Outer circumferential portion of collar, 111: Depressed portion, 121 to 123: Shift fork

## Claims

1. A transmission (60) comprising:
a first rotating shaft (61) as a drive shaft that is driven by an engine source;
a second rotating shaft (62) as a driven shaft that is driven by the drive shaft and is arranged parallel to the first rotating shaft (61);
a first gear (73) attached to the first rotating shaft (61) so as to be unrotatable and axially unmovable relative to the first rotating shaft (61);
a second gear (83) that is attached to the second rotating shaft (62) so as to be rotatable and axially unmovable relative to the second rotating shaft (62) and is in mesh with the first gear (73); and
a slide ring (103) that is attached to the second rotating shaft (62) so as to be unrotatable and axially movable relative to the second rotating shaft (62) and is adjacent to the second gear (83) in an axial direction, wherein:
the slide ring (103) includes an annular portion (105) that is concentric with the second rotating shaft (62), and a plurality of protruding portions (106) that extend radially inward from the annular portion (105) and are arranged next to each other in a circumferential direction;
the second gear (83) includes dogs (88) that protrude in the axial direction;
the slide ring (103) includes engagement holes (108), defined by the annular portion (105) and the protruding portions (106), into which the dogs (88) are inserted; the transmission being **characterised in that**
distal end portions of the protruding portions (106) of the slide ring (103) are not linked together;
the first gear (73) and the second gear (83) are helical gears each including a plurality of teeth inclined relative to the axial direction, and are configured so that the second gear (83) receives, from the first gear (73), a thrust force in a direction toward the slide ring (103).

2. The transmission (60) according to claim 1, comprising:
two or more other first gears (74, 75, 76) that are attached to the first rotating shaft (61) so as to be axially unmovable relative to the first rotating shaft (61);
two or more other second gears (84, 85, 86) that are attached to the second rotating shaft (62) so as to be axially unmovable relative to the second rotating shaft (62); and
another slide ring (101, 102) that is attached to the second rotating shaft (62) so as to be unrotatable and axially movable relative to the second rotating shaft (62) and is adjacent to at least one of the other second gears (84, 85, 86) in the axial direction, wherein:
all of the other first gears (74, 75, 76) are attached to the first rotating shaft (61) so as to be unrotatable relative to the first rotating shaft (61);
all of the other second gears (84, 85, 86) are attached to the second rotating shaft (62) so as to be rotatable relative to the second rotating shaft (62);
the other slide ring (101, 102) includes an annular portion (105) that is concentric with the second rotating shaft (62), and a plurality of protruding portions (106) that extend radially inward from the annular portion (105) and are arranged next to each other in the circumferential direction;
the other second gears (84, 85, 86) include dogs (88) that protrude in the axial direction;
the other slide ring (101, 102) includes engagement holes (108), defined by the annular portion (105) and the protruding portions (106), into which the dogs (88) are inserted; and
the protruding portions (106) of the other slide ring (101, 102) are not linked together.

3. The transmission (60) according to claim 1 or 2, wherein:
a diameter of the second gear (83) is larger than a diameter of the first gear (73).

4. The transmission (60) according to any one of claims 1 to 3, wherein the slide ring (103) includes six or more protruding portions (106).

5. The transmission (60) according to any one of claims 1 to 4, wherein a radially inner end (106i) of the protruding portions (106) of the slide ring (103) is located radially inward relative to a radially inner end (88i) of the dogs (88) of the second gear (83).

6. The transmission (60) according to any one of claims 1 to 5, wherein the protruding portions (106) of the slide ring (103) are formed so that a dimension thereof in the circumferential direction decreases while extending radially inward.

7. The transmission (60) according to any one of claims 1 to 6, wherein:
a groove (109) is formed on an outer circumferential surface of the slide ring (103), wherein the groove (109) is depressed radially inward and extending in the circumferential direction; and
the transmission (60) includes a shift fork (123) that engages with the groove (109) and is axially movable.

8. The transmission (60) according to any one of claims 1 to 7, wherein:
the transmission (60) includes a cylindrical collar (110) that is formed separate from the slide ring (103) and the second rotating shaft (62) and is interposed between the slide ring (103) and the second rotating shaft (62); and
the collar (110) includes an inner circumferential portion (110a) that engages with the second rotating shaft (62) so as to be unrotatable and axially unmovable relative to the second rotating shaft (62), and an outer circumferential portion (110b) including a plurality of depressed portions (111) formed thereon that engage with distal end portions of the protruding portions (106) of the slide ring (103) so as to be axially movable.

9. A vehicle (1) comprising:
the transmission (60) according to any one of claims 1 to 8;
the drive source (3) that is linked to the first rotating shaft (61) and drives the first rotating shaft (61);
a power transmitting member (25) that is linked to the second rotating shaft (62); and
a driving wheel (22) that is linked to the power transmitting member (25).

## Patentansprüche

1. Ein Getriebe (60) umfassend:
eine erste rotierende Welle (61) als Antriebswelle, die von einer Motorquelle angetrieben wird;
eine zweite rotierende Welle (62) als angetriebene Welle, die von der Antriebswelle angetrieben wird und parallel zu der ersten rotierenden Welle (61) angeordnet ist;
ein erstes Zahnrad (73), das an der ersten rotierenden Welle (61) so befestigt ist, dass es nicht drehbar und axial unbeweglich in Bezug auf die erste rotierende Welle (61) ist;
ein zweites Zahnrad (83), das an der zweiten rotierenden Welle (62) so angebracht ist, dass es drehbar und axial unbeweglich relativ zur zweiten Drehwelle (62) ist und mit dem ersten Zahnrad (73) in Eingriff steht; und
einen Gleitring (103), der an der zweiten rotierenden Welle (62) so angebracht ist, dass er nicht drehbar und relativ zu der zweiten rotierenden Welle (62) axial beweglich ist, und der in einer axialen Richtung an das zweite Zahnrad (83) angrenzt, wobei:
der Gleitring (103) einen ringförmigen Abschnitt (105), der konzentrisch zu der zweiten rotierenden Welle (62) ist, und eine Vielzahl von vorstehenden Abschnitten (106) aufweist, die sich von dem ringförmigen Abschnitt (105) radial nach innen erstrecken und in einer Umfangsrichtung nebeneinander angeordnet sind;
das zweite Zahnrad (83) Mitnehmer (88) aufweist, die in axialer Richtung vorstehen;
der Gleitring (103) Eingriffslöcher (108) aufweist, die durch den ringförmigen Abschnitt (105) und die vorstehenden Abschnitte (106) definiert sind, in die die Mitnehmer (88) eingesetzt werden;
wobei das Getriebe **dadurch gekennzeichnet ist, dass**
die distalen Endabschnitte der vorstehenden Abschnitte (106) des Gleitrings (103) nicht miteinander verbunden sind; und
das erste Zahnrad (73) und das zweite Zahnrad (83) Schrägzahnräder sind, die jeweils eine Vielzahl von Zähnen aufweisen, die relativ zur axialen Richtung geneigt sind, und so konfiguriert sind, dass das zweite Zahnrad (83) von dem ersten Zahnrad (73) eine Schubkraft in Richtung des Gleitrings (103) erhält.

2. Das Getriebe (60) gemäß Anspruch 1, umfassend:
zwei oder mehr andere erste Zahnräder (74, 75, 76), die an der ersten rotierenden Welle (61) so befestigt sind, dass sie relativ zu der ersten rotierenden Welle (61) axial unbeweglich sind;
zwei oder mehr andere zweite Zahnräder (84, 85, 86), die an der zweiten rotierenden Welle (62) so angebracht sind, dass sie relativ zur zweiten rotierenden Welle (62) axial unbeweglich sind; und
einen weiteren Gleitring (101, 102), der an der zweiten rotierenden Welle (62) so befestigt ist, dass er nicht drehbar und relativ zur zweiten rotierenden Welle (62) axial beweglich ist, und der in der axialen Richtung an mindestens eines der anderen zweiten Zahnräder (84, 85, 86) angrenzt, wobei:
alle anderen ersten Zahnräder (74, 75, 76) an der ersten rotierenden Welle (61) drehfest gegenüber der ersten rotierenden Welle (61) befestigt sind;
alle anderen zweiten Zahnräder (84, 85, 86) an der zweiten rotierenden Welle (62) befestigt sind, so dass sie relativ zur zweiten rotierenden Welle (62) drehbar sind;
der andere Gleitring (101, 102) einen ringförmigen Abschnitt (105), der konzentrisch zu der zweiten rotierenden Welle (62) ist, und eine Vielzahl von vorstehenden Abschnitten (106) aufweist, die sich von dem ringförmigen Abschnitt (105) radial nach innen erstrecken und in der Umfangsrichtung nebeneinander angeordnet sind;
die anderen zweiten Zahnräder (84, 85, 86) Mitnehmer (88) aufweisen, die in der axialen Richtung vorstehen;
der andere Gleitring (101, 102) Eingriffslöcher (108) aufweist, die durch den ringförmigen Abschnitt (105) und die vorstehenden Abschnitte (106) definiert sind, in die die Mitnehmer (88) eingesetzt werden; und
die vorstehenden Abschnitte (106) des anderen Gleitrings (101, 102) nicht miteinander verbunden sind.

3. Das Getriebe (60) gemäß Anspruch 1 oder 2, wobei:
ein Durchmesser des zweiten Zahnrads (83) größer ist als ein Durchmesser des ersten Zahnrads (73).

4. Das Getriebe (60) gemäß einem der Ansprüche 1 bis 3, wobei der Gleitring (103) sechs oder mehr vorstehenden Teile (106) aufweist.

5. Das Getriebe (60) gemäß einem der Ansprüche 1 bis 4, wobei
ein radial inneres Ende (106i) der vorstehenden Abschnitte (106) des Gleitrings (103) relativ zu einem radial inneren Ende (88i) der Mitnehmer (88) des zweiten Zahnrads (83) radial nach innen angeordnet ist.

6. Das Getriebe (60) gemäß einem der Ansprüche 1 bis 5, wobei
die vorstehenden Abschnitte (106) des Gleitrings (103) so geformt sind, dass eine Abmessung davon in der Umfangsrichtung abnimmt, während sie sich radial nach innen erstreckt.

7. Das Getriebe (60) gemäß einem der Ansprüche 1 bis 6, wobei:
eine Nut (109) an einer äußeren Umfangsfläche des Gleitrings (103) ausgebildet ist, wobei die Nut (109) radial nach innen eingerückt ist und sich in der Umfangsrichtung erstreckt; und
das Getriebe (60) eine Schaltgabel (123) aufweist, die in die Nut (109) eingreift und axial beweglich ist.

8. Das Getriebe (60) gemäß einem der Ansprüche 1 bis 7, wobei:
das Getriebe (60) einen zylindrischen Kragen (110) aufweist, der getrennt von dem Gleitring (103) und der zweiten rotierenden Welle (62) ausgebildet ist und zwischen dem Gleitring (103) und der zweiten rotierenden Welle (62) angeordnet ist; und
der Kragen (110) einen inneren Umfangsabschnitt (110a) aufweist, der mit der zweiten rotierenden Welle (62) in Eingriff steht, so dass er drehfest und axial unbeweglich relativ zu der zweiten rotierenden Welle (62) ist, und einen äußeren Umfangsabschnitt (110b), der eine Vielzahl von daran ausgebildeten vertieften Abschnitten (111) aufweist, die mit distalen Endabschnitten der vorstehenden Abschnitte (106) des Gleitrings (103) in Eingriff stehen, so dass sie axial beweglich sind.

9. Ein Fahrzeug (1) umfassend:
das Getriebe (60) gemäß einem der Ansprüche 1 bis 8,
die Antriebsquelle (3), die mit der ersten rotierenden Welle (61) verbunden ist und die erste rotierende Welle (61) antreibt;
ein Kraftübertragungselement (25), das mit der zweiten rotierenden Welle (62) verbunden ist; und
ein Antriebsrad (22), das mit dem Kraftübertragungselement (25) verbunden ist.

## Revendications

1. Transmission (60) comprenant :
un premier arbre rotatif (61) comme arbre d'entraînement qui est entraîné par une source motrice;
un second arbre rotatif (62) comme arbre entraîné qui est entraîné par l'arbre d'entraînement et est agencé parallèle au premier arbre rotatif (61) ;
un premier engrenage (73) fixé au premier arbre rotatif (61) de manière à ne pas pouvoir tourner et axialement non mobile par rapport au premier arbre rotatif (61) ;
un second engrenage (83) qui est fixé au second arbre rotatif (62) de manière à pouvoir tourner et axialement non mobile par rapport au second arbre rotatif (62) et qui est en prise avec le premier engrenage (73) ; et
une bague coulissante (103) qui est fixée au second arbre rotatif (62) de manière à être non rotative et axialement mobile par rapport au second arbre rotatif (62) et est adjacente au second engrenage (83) dans un sens axial, dans laquelle :
la bague coulissante (103) inclut une partie annulaire (105) qui est concentrique vis-à-vis du second arbre rotatif (62), et une pluralité de parties saillantes (106) qui s'étendent radialement vers l'intérieur à partir de la partie annulaire (105) et sont disposées l'une à côté de l'autre dans un sens circonférentiel ;
le second engrenage (83) inclut des chiens (88) qui font saillie dans le sens axial ;
la bague coulissante (103) inclut des trous d'engagement (108), définis par la partie annulaire (105) et les parties saillantes (106), dans lesquelles les chiens (88) sont insérés ;
la transmission étant **caractérisée en ce que** des parties d'extrémité distale des parties saillantes (106) de la bague coulissante (103) ne sont pas reliées ; et
le premier engrenage (73) et le second engrenage (83) sont des engrenages hélicoïdaux chacun incluant une pluralité de dents inclinées par rapport au sens axial, et sont configurées de manière que le second engrenage (83) reçoit, du premier engrenage (73), une force de poussée dans un sens allant vers la bague coulissante (103).

2. Transmission (60) selon la revendication 1, comprenant :
deux ou plusieurs autres premiers engrenages (74, 75, 76) qui sont fixés au premier arbre rotatif (61) de manière à être axialement non mobiles par rapport au premier arbre rotatif (61) ;
deux ou plusieurs autres seconds engrenages (84, 85, 86) qui sont fixés au second arbre rotatif (62) de manière à être axialement non mobiles par rapport au second arbre rotatif (62) ; et
une autre bague coulissante (101, 102) qui est fixée au second arbre rotatif (62) de manière à être non rotative et axialement mobile par rapport au second arbre rotatif (62) et est adjacente à au moins l'un parmi des autres seconds engrenages (84, 85, 86) dans le sens axial, dans laquelle :
tous les autres premiers engrenages (74, 75, 76) sont fixés au premier arbre rotatif (61) de manière à ne pas pouvoir tourner par rapport au premier arbre rotatif (61) ;
tous les autres seconds engrenages (84, 85, 86) sont fixés au second arbre rotatif (62) de manière à pouvoir tourner par rapport au second arbre rotatif (62) ;
l'autre bague coulissante (101, 102) inclut une partie annulaire (105) qui est concentrique vis-à-vis du second arbre rotatif (62), et d'une pluralité de parties saillantes (106) qui s'étendent radialement vers l'intérieur de la partie annulaire (105) et sont disposées l'une à côté de l'autre dans le sens circonférentiel ;
les autres seconds engrenages (84, 85, 86) incluent des chiens (88) qui font saillie dans le sens axial ;
l'autre bague coulissante (101, 102) inclut des trous d'engagement (108), définis par la partie annulaire (105) et les parties saillantes (106), dans lesquels les chiens (88) sont insérés ; et
les parties saillantes (106) de l'autre bague coulissante (101, 102) ne sont pas reliées.

3. Transmission (60) selon la revendication 1 ou 2, dans laquelle :
un diamètre du second engrenage (83) est plus grand qu'un diamètre du premier engrenage (73).

4. Transmission (60) selon l'une quelconque des revendications 1 à 3, dans laquelle la bague coulissante (103) inclut six ou plusieurs parties saillantes (106).

5. Transmission (60) selon l'une quelconque des revendications 1 à 4, dans laquelle une extrémité radialement intérieure (106i) des parties saillantes (106) de la bague coulissante (103) est située radialement vers l'intérieur par rapport à une extrémité radialement intérieure (88i) des chiens (88) du second engrenage (83).

6. Transmission (60) selon l'une quelconque des revendications 1 à 5, dans laquelle les parties saillantes (106) de la bague coulissante (103) sont formées de manière qu'une de leurs dimensions dans le sens circonférentiel diminue tout en s'étendant radialement vers l'intérieur.

7. Transmission (60) selon l'une quelconque des revendications 1 à 6, dans laquelle :
une rainure (109) est formée sur une surface circonférentielle extérieure de la bague coulissante (103), dans laquelle la rainure (109) est enfoncée radialement vers l'intérieur et s'étendant dans le sens circonférentiel ; et
la transmission (60) inclut une fourchette de changement de vitesse (123) qui s'engage avec la rainure (109) et est axialement mobile.

8. Transmission (60) selon l'une quelconque des revendications 1 à 7, dans laquelle :
la transmission (60) inclut un collier cylindrique (110) qui est formé séparé de la bague coulissante (103) et du second arbre rotatif (62) et qui est interposé entre la bague coulissante (103) et le second arbre rotatif (62) ; et
le collier (110) inclut une partie circonférentielle intérieure (110a) qui s'engage avec le second arbre rotatif (62) de manière à ne pas pouvoir tourner et axialement non mobile par rapport au second arbre rotatif (62), et une partie circonférentielle extérieure (110b) incluant une pluralité de parties enfoncées (111) formées sur celle-ci qui engage des parties d'extrémité distale des parties saillantes (106) de la bague coulissante (103) de manière à être axialement mobiles.

9. Véhicule (1) comprenant :
la transmission (60) selon l'une quelconque des revendications 1 à 8 ;
la source d'entraînement (3) qui est liée au premier arbre rotatif (61) et qui entraîne le premier arbre rotatif (61) ;
un élément de transmission de d'énergie (25) qui est lié au second arbre rotatif (62) ; et
une roue d'entraînement (22) qui est liée à l'élément de transmission de puissance (25).
